# EUROPÄISCHE PATENTSCHRIFT

(11) **EP 1 138 100 B1**
(45) Veröffentlichungstag und Bekanntmachung des Hinweises auf die Patenterteilung: **05.11.2008**
(21) Anmeldenummer: 99960875.5
(22) Anmeldetag: 09.11.1999
(51) Int. Cl.: H01S 3/03, H01S 3/038

(54) **CO 2-SLABLASER**
CO 2- SLAB LASER
LASER A PLAQUE AU CO 2

(30) Priorität: 13.11.1998 DE 19852284
(43) Veröffentlichungstag der Anmeldung: 04.10.2001
(60) Teilanmeldung: 08016310.8
(73) Patentinhaber: Taufenbach GmbH, 24118 Kiel (DE)
(72) Erfinder: Taufenbach, Norbert, 24340 Eckernförde (DE)
(74) Vertreter: Klickow, Hans-Henning
(86) Internationale Anmeldenummer: PCT/DE1999/003570
(87) Internationale Veröffentlichungsnummer: WO 2000/030222

(56) Entgegenhaltungen:
- EP-A- 0 477 864
- EP-A- 0 585 481
- DE-A- 4 010 149
- DE-U- 29 804 405
- US-A- 5 140 606

## Beschreibung

Die Erfindung betrifft einen CO₂-Slablaser nach dem Oberbegriff des Hauptanspruches.

Slablaser sind durch frühere Anmeldungen unter anderem auch des Inhabers dieses Patentes (z.B. WO 94/15384) bekannt. Ihre Geometrie zeichnet sich dadurch aus, daß zwischen zwei zueinander im wesentlichen parallelen plattenförmigen Elektroden ein schmaler Entladungsraum für ein Gas, insbesondere CO₂, gebildet wird, das durch eine an die Elektroden angelegte Hochfrequenzspannung angeregt wird. An den sich gegenüberliegenden Stirnseiten des durch die Elektroden gebildeten schmalen Entladungsraumes sind zum Erzielen einer Laserwirkung Resonatorspiegel angeordnet.

Als Stand der Technik ist ein Artikel in der US-Zeitschrift N. Iehisa et al. "Performance characteristics of sealed-off CO2 laser with La1-xSrxCoO3 oxide cathode" Journal of Appl. Phys 59 (1986), Seite 317 bis 323 zu nennen, in dem bereits ein geströmter Gaslaser mit Ringelektroden, die keine Kühlfunktion sowie außerhalb von Brewster-Fenstern vorgesehenen äußeren Spiegeln beschrieben ist, wobei in einer Ausführung auch ein Partialreflektor außen auf ein Endstück aufgesetzt ist, so daß sich der Spiegel zusammen mit den Elektroden in der Relativposition verändern läßt.

Weiter ist US-Patent 5,140,606 zu nennen, in dem bereits bei einem slab-wafeguide-Laser ein ringförmiges, den Laserraum verschließendes Federlager zum Justieren wenigstens eines Spiegels separat von der Elektrode dargestellt ist.

Weiterer Stand der Technik ist aus den europäischen Patentanmeldungen mit den Veröffentlichungsnummern 0 275 023 A1, 0 305 893 B1 und 0 477 864 A1 bekannt.

Allen vorgenannten Konstruktionen ist gemein, daß sie zueinander parallele, innengekühlte Elektroden aufweisen, die zwischen ihren einander zugewandten Flachseiten einen gasgefüllten Raum bilden, in dem sich ein zu pumpendes Gas befindet. Diese Elektroden sind jeweils mit einer aufwendigen Befestigung im Resonatorraum zu versehen, insbesondere da sich durch thermische Verbiegung Probleme ergeben, die Justierung, die ganz wesentlich die Laserleistung bei einem instabilen Resonator bestimmt, vorzunehmen bzw. nachzujustieren.

Gleichzeitig ist zu beachten, daß die zu justierenden Einheiten sich in einem abgeschlossenen Raum befinden, durch dessen Wände möglichst wenig Durchlässe zu führen sind, da diese nur sehr aufwendig abzudichten sind. Insbesondere erzeugen Dichtungen aus flexiblen Materialien Probleme, da sie "ausgasen". Aber selbst wenn man solche Dichtungen vermeidet, ergeben unvermeidliche Dichtspalte kritische Abdichtprobleme.

Der Erfindung liegt nun die Aufgabe zugrunde, einen sehr kleinen einfachen Laser zu schaffen, wobei möglichst wenig Teile zu einer kostengünstigen Herstellung führen sollen. Erfindungsgemäß wird dies durch einen CO₂-Slablaser mit den Merkmalen des Hauptanspruches gelöst. Die Unteransprüche geben vorteilhafte Ausführungsformen der Erfindung wieder.

Es wird dabei möglich, ein rein metallisches, hochdichtes Gehäuse zu bauen. Ein Quarzgehäuse weist dabei die gleichen Dichtigkeitsvorteile auf, da man es mit Metall verlöten kann.

Insbesondere ist es vorteilhaft, einen gasgefüllten Raum, der durch bewegliche, zur Verkippung um geringe Winkel, als Federbalg ausgebildete Endstücke begrenzt ist, und in dem die Elektroden einander gegenüberliegend von den jeweiligen Endstücken getragen werden, längs zum Rohrgehäuse angeordnet sind, mit einer völligen Gasdichtigkeit zu erhalten. Gleichzeitig kann die Ausrichtung der Spiegel, die auf den Elektroden oder an den Endstücken, jedenfalls unbeweglich zu den Elektroden und Endstücken angeordnet sind, durch außerhalb des gasgefüllten Raums, an den Endstücken angebrachte Justierschrauben über die vorhandene feste Verbindung der Elektroden mit den Endstücken (oder durch die einteilige Ausbildung an einem der beiden Elemente Endstück oder Elektrode) vorgenommen werden. Durchführungen durch die Wandung des gasgefüllten Raums müssen nicht vorgesehen werden.

Weiterer Stand der Technik ist aus EP-A-0 585 481 und DE-A-4 010 149 bekannt, worin die Elektroden mit den Spiegel verbunden sind.

Justierelemente, die zwischen zwei Abschnitten des jeweiligen Endstückes, die durch die je wenigstens eine Kerbe, - vorteilhafter zwei versetzt angeordnete Kerben, je eine von innen und eine von außen - gebildet werden, dienen dazu, die Abschnitte des Endstücks derart gegeneinander winkelzupositionieren, daß der äußere (bewegliche) Abschnitt, an dem die jeweilige Elektrode befestigt ist, in seiner Winkellage justierbar ist, da die zwischen den Kerben belassene dünne Wandstärke eine geringe Winkeländerung durch elastische und/oder durch plastische Verformung des Materials zuläßt. Die Wand wirkt wie ein Federlager, ähnlich einem Faltenbalg oder einer elastischen Membran bei kleinen Kippbewegungen der äußeren Ringfläche zur inneren Ringfläche.

Es wird vorgeschlagen, die beweglichen Abschnitte der Endstücke zueinander durch Zugstäbe, die mit dem jeweiligen anderen beweglichen Endstück in Verbindung stehen, federvorbelastet zu verbinden, um so eine konstante Rückstellkraft auf die beweglichen Endabschnitte auszuüben.

Der gasgefüllte Raum wird durch ein Rohrgehäuse gebildet, das dabei verschiedene Aufgaben übernimmt. Zunächst soll es als Rezipient für das Lasergasgemisch dienen, aber gleichzeitig auch die Abschnitte, auf denen die Elektroden und damit auch die Spiegel befestigt sind, auf konstantem Abstand halten. Weiter isoliert es die beiden Elektroden elektrisch voneinander. Als Werkstoff für das Rohrgehäuse eignen sich daher insbesondere nicht-leitende Werkstoffe, die vorteilhafterweise geringe Wärmedehnung, hohe Gasdichtigkeit und hohe Steifigkeit aufweisen sollen. Es werden Quarzglas und Aluminiumoxydkeramik vorgeschlagen.

An der Außenseite eines nicht-leitenden Rohrgehäuses ist für die entstehende elektrische Abstrahlung eine Abschirmung vorzusehen. Vorteilhafterweise dient diese gleichzeitig als Induktivität für die Elektroden. Diese Abschirmung kann als Drahtgeflecht, Metallbalg oder Metallfolie ausgebildet sein. Bei einem Metallgehäuse ist keine separate Abschirmung notwendig, ebenso wenn lediglich die Oberfläche metallisiert wird. Um eine geeignete Induktivität des Rohrgehäuses zu erreichen, um die im Inneren unter HF-Bedingungen angeregte Entladung zu stabilisieren, kann dann im wesentlichen die innere Geometrie, insbesondere das Hüllvolumen, der Induktivität angepaßt werden.

Da die Spiegel eines erfindungsgemäßen Lasers keine innere Kühlung haben und keine eigene Justiermöglichkeit zur Elektrode besitzen, da Spiegel und Elektrode eine Einheit bilden (entweder einstückig hergestellt oder fest miteinander verschraubt) wird die Wärme, die in den Spiegeln entsteht, an die Elektrode weitergeleitet. Damit diese Elektroden nun möglichst wenig thermische Verbiegung aufweisen, werden sie mit halbkreisförmigem Querschnitt ausgebildet und durch Kühlbohrungen innen gekühlt. In diesen Kühlbohrungen befindet sich ein durch eine Kühlmittelpumpe gefördertes Kühlmedium oder vorteilhafterweise ein Medium oder Dampf, welche durch freie Konvektionsströmung und/oder durch Kapillarwirkung sowie durch Phasenübergänge an den Wänden der Hohlräume oder Kapillare Wärme oder latente Wärme von den Innenwänden der Kühlbohrung abtransportieren.

Vorteilhafterweise sind an den Endstücken des Rohrgehäuses, außerhalb des Gasraums, Luftkühler vorgesehen, zu deren Kühlrippen die durch die Kühlbohrungen gebildeten Kühlleitungen von den Elektroden kommend verlaufen. Diese Kühlrippen können dann von außen zwecks besserer Wärmeabgabe durch Ventilatoren angeströmt werden. Es wird angestrebt, einen Natur-Umlauf nach dem Prinzip der "Heat Pipe" zu verwenden. Heat Pipes sind hermetisch verschlossene und evakuierte Hohlzylinder, in deren Inneren sich ein beliebiges Medium, z.B.

Wasser, befindet, das bei einem üblicherweise gewählten Unterdruck bei niedrigeren Temperaturen siedet.

Beispielsweise nimmt Wasser unter diesen Unterdruckbedingungen nur einen kleinen Teil des freien Raums ein, der Rest wird von Wasserdampf ausgefüllt. Das Wasser bzw. der Wasserdampf dient dabei der Wärmeübertragung von einer beheizten Stelle des Rohres zu einer gekühlten (kälteren Stelle) , das heißt, daß die Wärmeaufnahme bzw. -abgabe durch das Wasser nicht so sehr aufgrund der Wärmekapazität, sondern vorwiegend aufgrund der latenten Wärme beim Phasenübergang erfolgt. Damit werden Wärmemengen bei sehr geringen Temperaturunterschieden transportiert. Das Prinzip der Heat Pipe wurde schon im Jahre 1942 entdeckt und wird meist in der Raumfahrttechnik verwandt.

Erfindungsgemäß werden auf diese Weise sperrige Kühlungen vermieden und ein kleiner und einfacher Laser ermöglicht, in den (mit den Luftkühlern an beiden Enden versehen) lediglich noch HF-Energie über eine HF-Leitung eingespeist werden muß, um Laserlicht zu erhalten. Es sind keine weiteren Kühlmittelleitungen oder Stromzuführungen notwendig.

Durch die gewährleistete Gasdichtigkeit wird die maximale Gasstandzeit erreicht, da keine Verunreinigungen von außen eindringen. Damit wird die Verfügbarkeit des Lasers lediglich durch die Gaszersetzung sowie durch Gasverunreinigung durch Sputtereffekt bei der Gasentladung zeitlich begrenzt.

Weitere Merkmale und Vorteile der Erfindung ergeben sich aus nachfolgender Beschreibung eines bevorzugten Ausführungsbeispiels der Erfindung. Dabei zeigt:
- Fig. 1: den erfindungs gemäßen Laser mit Kühleinrichtungen an beiden Enden in perspektivischer Gesamtansicht,
- Fig. 2: den erfindungsgemäßen Laser für externen Kühlkreislauf in teilweise geschnittener Ansicht, wobei die beiden Elektroden mit den Kühlmittelkanälen sowie der Aufbau der Endstücke mit Federlager zu erkennen ist,
- Fig. 3: ein Federlager-Endstück in perspektivischer Ansicht,
- Fig. 4: das Endstück der Fig. 3 in geschnittener Darstellung,
- Fig. 5: den Laseraufbau der Fig. 2 im Längsschnitt,
- Fig. 6: eine Explosionsdarstellung des Laserraufbaus mit einem das Rohrgehäuse umgebenden Abschirmnetz und
- Fig. 7: einen Laseraufbau mit einem Rohrgehäuse, das in seiner Mitte mit einem Federbalg versehen ist.

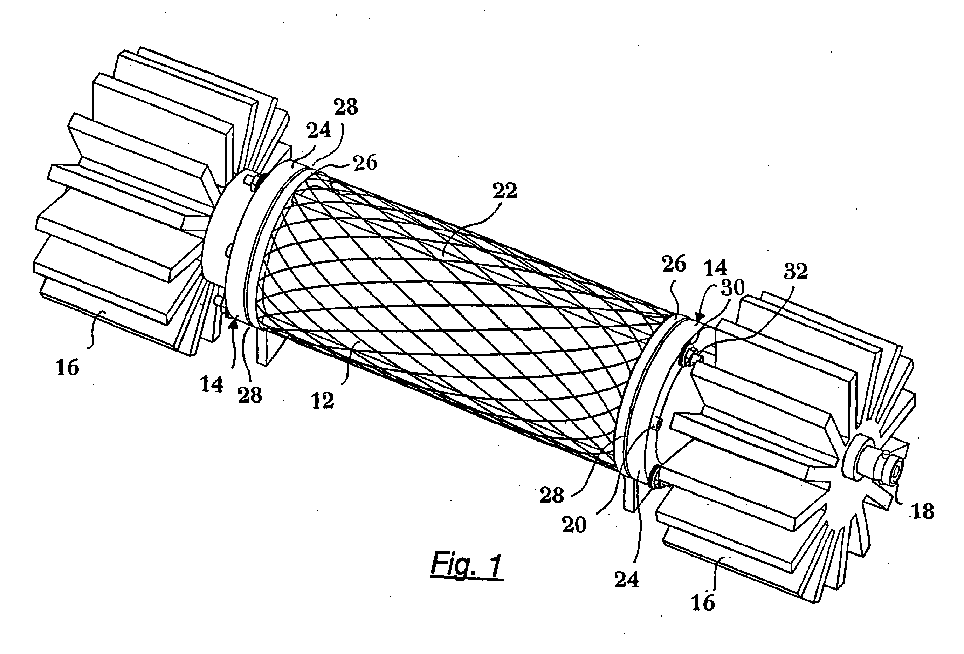

Der erfindungsgemäße Laser, der in der Fig. 1 dargestellt ist, besteht aus einem Rohrgehäuse 10, um das ein Abschirmnetz 12, für den Fall, daß als Werkstoff ein nicht-leitender Werkstoff verwandt wird, gespannt ist. Alternativ sind auch Metallisierungen der Außenoberfläche möglich. An den beiden Enden befinden sich Endstücke 14, durch die Elektroden 34, 36 hindurchgeführt und auf die vorteilhafterweise Luftkühler 16 aufgesetzt sind. Durch das eine Endstück mit seinem Luftkühler ist eine HF-Leitung hindurchgeführt, deren Anschluß 18 im rechten Bildteil zu erkennen ist. Durch das andere Endstück mit Luftkühler wird die Laserlichtenergie austreten.

An den Endstücken sind jeweils Justierschrauben 20 vorgesehen, und unterhalb des Abschirmnetzes 12 werden die beweglichen Abschnitte der Endstücke durch Zugstangen 22 miteinander verbunden. Die Zugstangen 22 greifen an den Endstücken 14 derart an, daß sie die beweglichen Abschnitte 24, die durch Kerben 28 von den festen Abschnitten 26 getrennt sind, jeweils aneinander ziehen. Damit die Endstücke 24 noch eine Beweglichkeit aufweisen, sind Federpakete 30 unterhalb von Muttern 32 auf den voneinander weg weisenden Rückseiten der Abschnitte 24 anliegend vorgesehen.

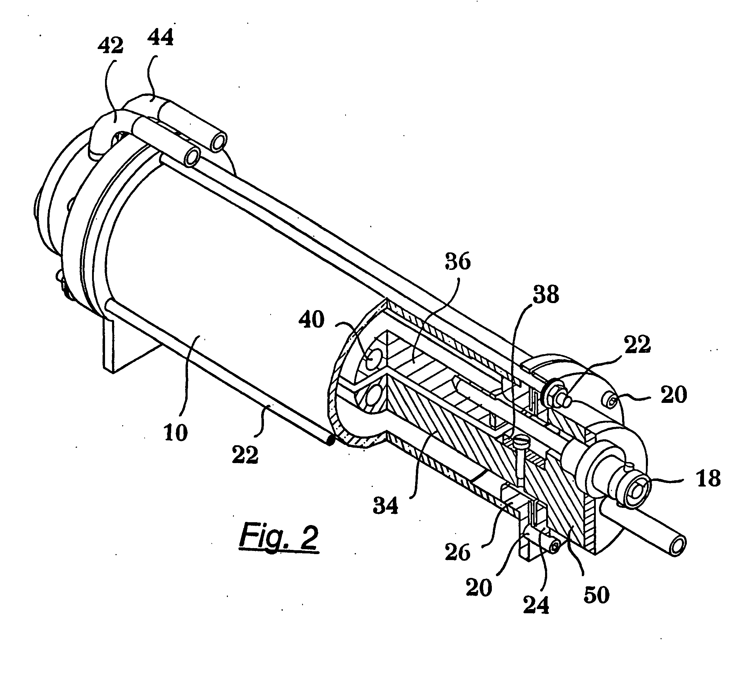

Dieses ermöglicht es, mit Hilfe der Justierschrauben 20, die Endstücke, die wie in der Fig. 2 dargestellt, jeweils eine der beiden Elektroden befestigt am äußeren (beweglichen) Abschnitt 24 tragen, mit Hilfe der Justierschrauben 20 in der Winkelposition zur jeweils anderen Elektrode (in der Fig. 2) der Elektrode 36, die am linken Ende befestigt ist, zu justieren.

Weiter ist in der Fig. 2 einer der Spiegel, nämlich der Spiegel 38, der auf der unteren Elektrode 34 mit einer Schraube befestigt ist, dargestellt. Weiter ist zu erkennen, daß drei Justierschrauben 20 und drei Zugstangen 22 vorgeschlagen werden, um eine optimale Justierbarkeit zu erreichen. Das Rohrgehäuse 10 wird dabei zylindrisch ausgebildet, wobei die Elektroden 34, 36 im Schnitt einen Kreisabschnitt bilden, dessen Radius kleiner als der Innenradius des Rohrgehäuses ist. So wird der Lasergasraum optimal ausgenutzt.

Im übrigen sind die Kühlkanäle 40 innerhalb der Elektroden sowie der halbkreisförmige Querschnitt der Elektroden 34, 36 zu erkennen. Die Kühlmittelbohrungen 40 werden entweder mit Luftkühlern 16 oder mit außen angeschlossenen Vor- und Rückläufen 42, 44, die zu üblichen externen Kühlkreisläufen führen, verbunden.

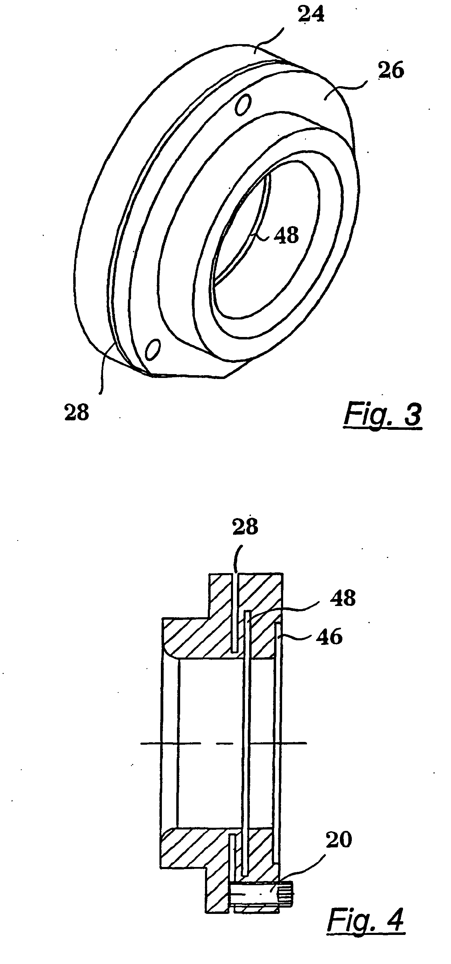

Die erfindungsgemäßen Kerben 28 werden, damit ein Steg mit dünner Wandstärke erreicht wird, vorteilhafterweise durch eine Kerbe 48 an der Innenseite ergänzt, wie aus den Fig. 3 und 4 zu erkennen ist. In eine Paßausnehmung 46 auf der Außenseite der Endstücke wird dann der im Durchmesser erweiterte Elektrodenfuß 50 eingepaßt.

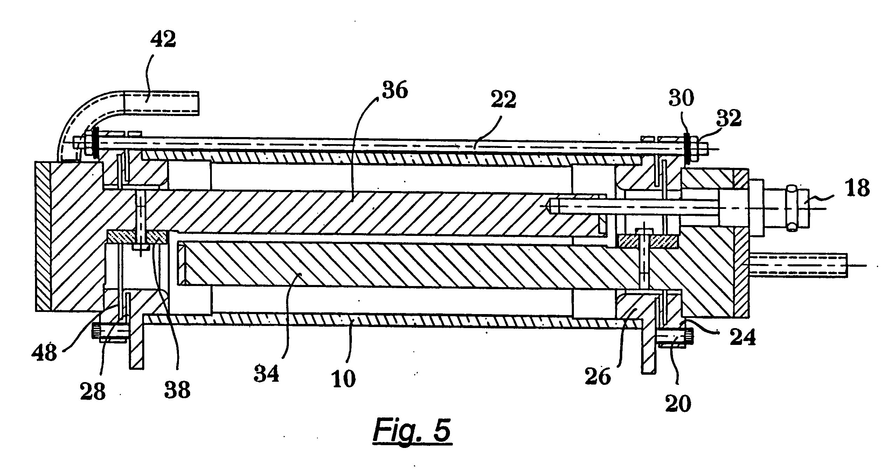

In der Fig. 5 ist nochmals wie in der Fig. 2 perspektivisch die Anordnung im Längsschnitt dargestellt. Hier ist nun zu erkennen, wie sich die jeweils auf den Elektroden befestigten Spiegel 38 im Gasraum gegenüberstehen. Wie bereits ausführlich in den genannten Druckschriften des Standes der Technik beschrieben, wird die HF-Energie, auf die elektrisch gegeneinander isolierten Elektroden aufgebracht, so daß eine Gasentladung zwischen den Elektroden stattfindet, wobei zum Auskoppeln der Auskoppelspiegel kürzer als der Rückspiegel ausgeführt ist, so daß ein Teil der Laserlichtenergie ausgegeben wird. Die Anzahl der Reflektierungen und damit die optimale Ausnutzung der mehrfachen Reflexion ist dabei stark von der richtigen Justierung abhängig.

Diese Justierung kann mit den Justierschrauben 20 durch Veränderung der Lage der äußeren Abschnitte der Endstücke 24 zu den inneren Abschnitten der Endstücke 26 erreicht werden. Es ist auch denkbar, in den Justierschrauben piezoelektrische Kristalle anzuordnen, um den Resonator feinzujustieren oder ggf. im Betrieb nachzujustieren. Auch Können in den Elektroden selbst solche piezoelektrischen Kristalle vorgesehen werden, um laserlichtleistungsabhängig der thermischen Verbiegung der Elektroden entgegenzuwirken.

In der Zeichnung ist im rechten Abschnitt deutlich zu erkennen, daß es sich um einstückige Endstücke handelt. Ein zugelöteter oder zugeschweißter Gesamtaufbau, bei dem die beiden Abschnitte 24, 26 der Endstücke 14 (sowie das den gasgefüllten Raum umgebende Gehäuse mit den Abschnitten 26 und die Elektroden 34, 36 jeweils mit dem Abschnitt 24) gasdicht miteinander verbunden sind, ist vorzuziehen. Ein Zukleben oder Dichten über Dichtringe würde eine nicht so gute Gasdichtigkeit ergeben. Dabei kann die Justierbarkeit der Elektroden mit den Spiegeln auch nur zum Zeitpunkt der Montage gegeben sein, und später nach dem Justieren durch Verschweißen, Verlöten oder Verkleben der Lagerung fixiert werden. Für diesen Fall ist es nicht notwendig, die Justierelemente am Laser anzubringen oder an ihm zu belassen.

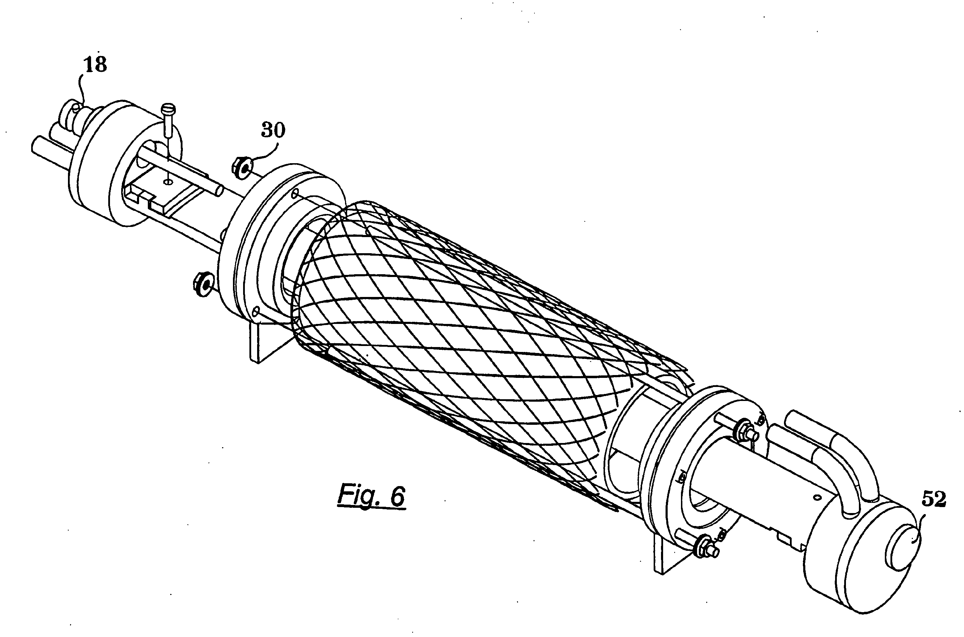

In der Fig. 6 ist schließlich unter Verdrehung der Seiten rechts und links nochmals eine Explosionsdarstellung des Aufbaus zu erkennen, wobei der Strahlaustritt 52, der außermittig den Laseraufbau an der der HF-Einspeisung 18 gegenüberliegenden Seite verläßt, zu erkennen ist.

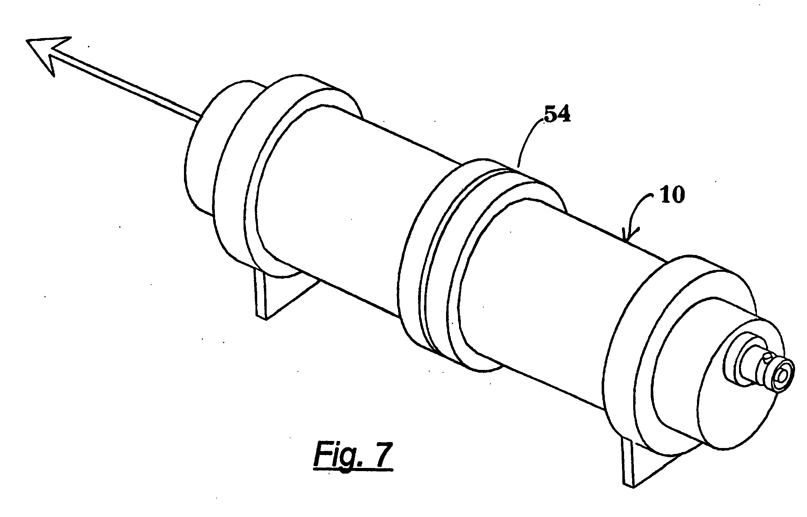

In der Fig. 7 ist der CO₂-Slablaser in einer weiteren Ausbildung dargestellt, bei der das Rohrgehäuse 10 zweiteilig, mittig durch einen Federbalg 54 verbunden, ausgebildet ist, wobei die beiden Teile zueinander justierbar ausgebildet sind.

## Patentansprüche

1. CO₂-Slablaser mit einem durch ein Rohrgehäuse (10) begrenzten gasgefüllten Raum, mit mindestens zwei Elektroden, die sich in das Rohrgehäuse erstrecken, einander überlappen und einen Entladungsraum bilden, und mit Resonatorspiegeln, **dadurch gekennzeichnet, daß**
- die Elektroden jeweils an den gegenüberliegenden Enden des Rohrgehäuses gehalten werden,
- die Spiegel zu den Elektroden unbeweglich angeordnet sind, und
- die Elektroden gemeinsam mit den Spiegeln zueinander justierbar sind.

2. CO₂-Slablaser mit einem durch ein Rohrgehäuse begrenzten gasgefüllten Raum, mit mindestens zwei Elektroden, die sich in das Rohrgehäuse erstrecken, einander überlappen und einen Entladungsraum bilden, und mit Resonatorspiegeln, **dadurch gekennzeichnet, daß**
- die Elektroden jeweils an den gegenüberliegenden Enden des Rohrgehäuses gehalten werden,
- die Spiegel einstückig mit den Elektroden ausgebildet sind, und
- die Elektroden gemeinsam mit den Spiegeln zueinander justierbar sind.

3. CO₂-Slablaser nach Anspruch 1 oder 2, **dadurch gekennzeichnet, daß** die Elektroden von den das Rohrgehäuse verschließenden Endstücken gehalten werden.

4. CO₂-Slablaser nach Anspruch 3, **dadurch gekennzeichnet, daß** die Elektroden einstückig mit den Endstücken ausgebildet sind.

5. CO₂-Slablaser nach Anspruch 3 oder 4, **dadurch gekennzeichnet, daß** die Spiegel einstückig mit den Endstücken ausgebildet sind.

6. CO₂-Slablaser nach einem der vorangehenden Ansprüche, **dadurch gekennzeichnet, daß** das Rohrgehäuse (10) zweiteilig ausgebildet ist, wobei die beiden Teile zueinander justierbar ausgebildet sind.

7. CO₂-Slablaser nach Anspruch 3, 4 oder 5, **dadurch gekennzeichnet, daß** wenigstens eines der Endstücke über ein Federlager an das Rohrgehäuse (10) angesetzt ist.

8. CO₂-Slablaser nach Anspruch 7, **dadurch gekennzeichnet, daß** das Federlager ein Balg ist.

9. CO₂-Slablaser nach einem der vorangehenden Ansprüche, **gekennzeichnet durch** Justierelemente (20), die sich an dem Rohrgehäuse abstützen und auf die Elektroden wirken.

10. CO₂-Slablaser nach Anspruch 9, **dadurch gekennzeichnet, daß** die Justierelemente piezoelektrische Kristalle enthalten, die elektrisch ansteuerbar sind.

11. CO₂-Slablaser nach einem der vorangehenden Ansprüche, **dadurch gekennzeichnet, daß** das Rohrgehäuse (10) zylindrisch ausgebildet ist und die Elektroden im Schnitt einen Kreisabschnitt bilden, dessen Radius kleiner als der Innenradius des Rohrgehäuses ist.

12. CO₂-Slablaser nach einem der vorangehenden Ansprüche, **dadurch gekennzeichnet, daß** die Elektroden und damit die Spiegel nach dem Justieren zueinander fixiert sind.

## Claims

1. CO₂ slab laser comprising a gas-filled chamber which is delimited by a tubular housing (10), comprising at least two electrodes which extend into the tubular housing, overlap one another and form a discharge chamber, and comprising resonator mirrors, **characterised in that**
- the electrodes are in each case held at the opposite ends of the tubular housing,
- the mirrors are arranged such that they cannot move with respect to the electrodes, and
- the electrodes together with the mirrors can be adjusted with respect to one another.

2. CO₂ slab laser comprising a gas-filled chamber which is delimited by a tubular housing, comprising at least two electrodes which extend into the tubular housing, overlap one another and form a discharge chamber, and comprising resonator mirrors, **characterised in that**
- the electrodes are in each case held at the opposite ends of the tubular housing,
- the mirrors are formed in one piece with the electrodes, and
- the electrodes together with the mirrors can be adjusted with respect to one another.

3. CO₂ slab laser according to claim 1 or 2, **characterised in that** the electrodes are held by the end pieces which close the tubular housing.

4. CO₂ slab laser according to claim 3, **characterised in that** the electrodes are formed in one piece with the end pieces.

5. CO₂ slab laser according to claim 3 or 4, **characterised in that** the mirrors are formed in one piece with the end pieces.

6. CO₂ slab laser according to one of the preceding claims, **characterised in that** the tubular housing (10) is formed in two parts, wherein the two parts are designed such that they can be adjusted with respect to one another.

7. CO₂ slab laser according to claim 3, 4 or 5, **characterised in that** at least one of the end pieces is attached to the tubular housing (10) via a flexible bearing.

8. CO₂ slab laser according to claim 7, **characterised in that** the flexible bearing is a bellows.

9. CO₂ slab laser according to one of the preceding claims, **characterised by** adjusting elements (20) which are supported on the tubular housing and act on the electrodes.

10. CO₂ slab laser according to claim 9, **characterised in that** the adjusting elements contain piezoelectric crystals which can be electrically actuated.

11. CO₂ slab laser according to one of the preceding claims, **characterised in that** the tubular housing (10) is of cylindrical shape and the electrodes in cross section form a segment of a circle, the radius of which is smaller than the internal radius of the tubular housing.

12. CO₂ slab laser according to one of the preceding claims, **characterised in that** the electrodes and thus the mirrors are fixed with respect to one another after adjustment.

## Revendications

1. Laser à plaque au CO₂ avec un espace rempli de gaz, limité par un logement tubulaire (10), avec au moins deux électrodes, qui s'étendent dans le logement tubulaire, se chevauchent et forment un espace de décharge, et avec des miroirs de cavité, **caractérisé en ce que**
- les électrodes sont maintenues chaque fois, sur les extrémités opposées du logement tubulaire,
- les miroirs sont agencés de manière immobile par rapport aux électrodes, et
- les électrodes avec les miroirs, sont ajustables l'une par rapport à l'autre.

2. Laser à plaque au CO₂ avec un espace rempli de gaz, limité par un logement tubulaire, avec au moins deux électrodes, qui s'étendent dans le logement tubulaire, se chevauchent et forment un espace de décharge, et avec des miroirs de cavité, **caractérisé en ce que**
- les électrodes sont maintenues chaque fois, sur les extrémités opposées du logement tubulaire,
- les miroirs sont formés d'une pièce avec les électrodes, et
- les électrodes avec les miroirs, sont ajustables l'une par rapport à l'autre.

3. Laser à plaque au CO₂ selon la revendication 1 ou 2, **caractérisé en ce que** les électrodes sont maintenues par les pièces terminales fermant le logement tubulaire.

4. Laser à plaque au CO₂ selon la revendication 3, **caractérisé en ce que** les électrodes sont formées d'une pièce avec les pièces terminales.

5. Laser à plaque au CO₂ selon la revendication 3 ou 4, **caractérisé en ce que** les miroirs sont formés d'une pièce avec les pièces terminales.

6. Laser à plaque au CO₂ selon l'une quelconque des revendications précédentes, **caractérisé en ce que** le logement tubulaire (10) est formé de deux pièces, où les deux pièces sont formées de manière ajustable l'une par rapport à l'autre.

7. Laser à plaque au CO₂ selon la revendication 3, 4 ou 5, **caractérisé en ce qu'**au moins une des pièces terminales est jointe par un patin articulé de ressort au logement tubulaire (10).

8. Laser à plaque au CO₂ selon la revendication 7, **caractérisé en ce que** le ressort est un coussin d'air pneumatique.

9. Laser à plaque au CO₂ selon l'une quelconque des revendications précédentes, **caractérisé par** des éléments d'ajustement (20), qui s'appuient sur le logement tubulaire et agissent sur les électrodes.

10. Laser à plaque au CO₂ selon la revendication 9, **caractérisé en ce que** les éléments d'ajustement contiennent des cristaux piézoélectriques, qui sont réglables de manière électrique.

11. Laser à plaque au CO₂ selon l'une quelconque des revendications précédentes, **caractérisé en ce que** le logement tubulaire (10) est de forme cylindrique et **en ce que** les électrodes forment en coupe, un segment de cercle, dont le rayon est inférieur au rayon interne du logement tubulaire.

12. Laser à plaque au CO₂ selon l'une quelconque des revendications précédentes, **caractérisé en ce que** les électrodes, et ainsi les miroirs, sont fixés l'un par rapport à l'autre, après l'ajustement.
